# EUROPEAN PATENT APPLICATION

(11) **EP 4 674 793 A1**
(43) Date of publication of application: **07.01.2026**
(21) Application number: 25179533.2
(22) Date of filing: 28.05.2025
(51) Int. Cl.: B65G 59/00, B65G 59/04, B65G 61/00, B65G 47/91

(54) **DEPALLETISING SYSTEM AND METHOD**

(30) Priority: 05.07.2024 IT 202400015619
(71) Applicant: CLEVERTECH S.p.A., 42023 Cadelbosco di Sopra (RE) (IT)
(72) Inventor: CERVI, Simone, 42023 CADELBOSCO DI SOPRA (REGGIO NELL'EMILIA) (IT)
(74) Representative: Monelli, Alberto

(57) **Abstract**

A depalletising system, comprising:
- a zone (2) for positioning a stack of layers of loose containers;
- a head (3) for removing an upper layer of said layers of the stack; said removal head (3) being suitable for moving said upper layer by sliding; said removal head (3) comprising at least one sidewall (31) for pushing the upper layer;
- an unloading support (4) movable with respect to the stack and that allows the upper layer moved by the removal head (3) to be supported;
- sensor means (5) that allow the reaching of a desired position of the support (4) with respect to the upper layer to be detected.

## Description

The present invention relates to a depalletising system for layers of containers. In particular, it relates to layers of stacked loose products. The layers are opportunely separated from one another by a sheet.

Systems for depalletising layers of loose containers comprising a positioning zone for a stack of such layers are known. The stacked loose layers have a substantially quadrilateral arrangement. The products inside one layer are not constrained to one another and, in any case, are not stably constrained to the layers above or below. In order to constrain the stack and the layers of containers so that they remain arranged according to a predefined position, the positioning zone has four confinement walls within which to position the stack of products. The upper layer is then removed by a gripping head and moved along a conveying line. After the upper layer is removed, the stack is lifted and the head removes the next upper layer.

A drawback of this embodiment solution is linked to the fact that the confinement walls have a cost and also risk hitting, damaging, moving the containers, the layers of containers or the interposed interlayer sheets (for example, during lifting of the layers).

In this context, the technical task at the basis of the present invention is to propose a depalletising system that allows the drawbacks described above to be overcome and allows a correct depalletising of stacked layers of loose containers (advantageously in one free pallet layer, not confined by walls).

The defined technical task and the specified aims are substantially achieved by a depalletising system and method comprising the technical features set forth in one or more of the appended claims.

Further features and advantages of the present invention will become more apparent from the illustrative and thus non-limiting description of a preferred but not exclusive embodiment of a depalletising system as illustrated in the appended drawings, in which:

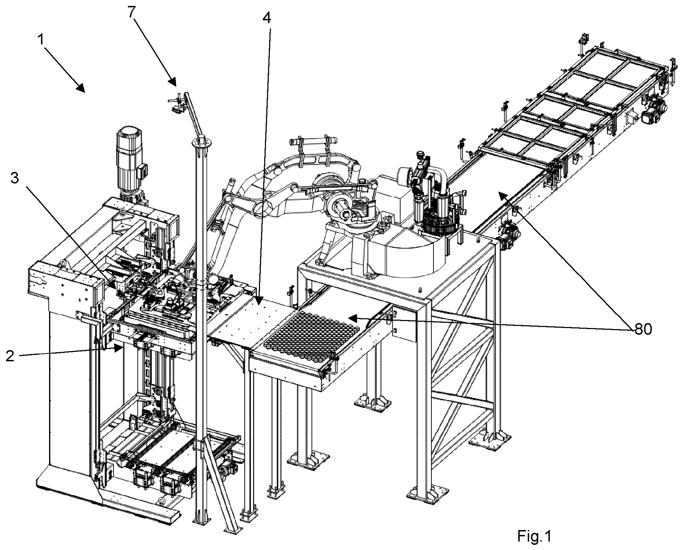

- Figure 1 shows a perspective view of a depalletising system according to the present invention;

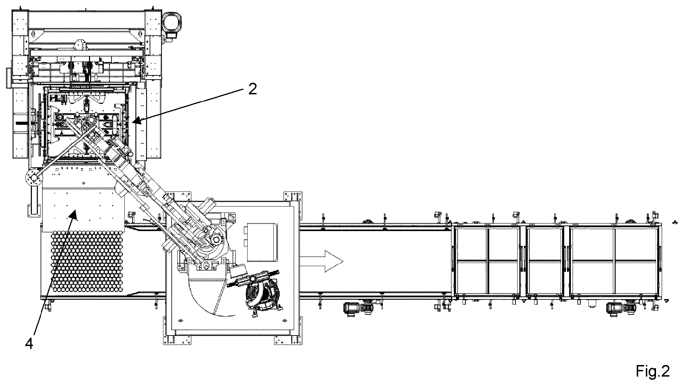

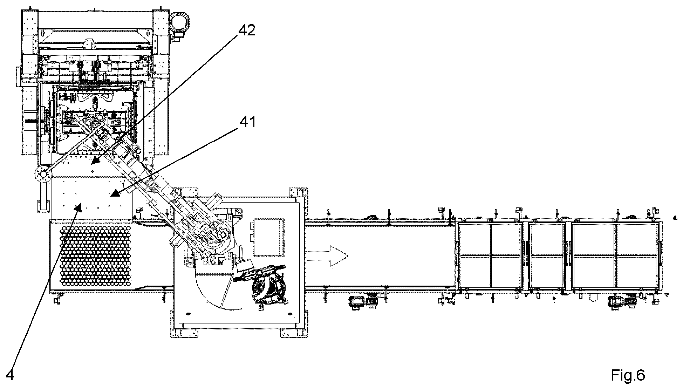

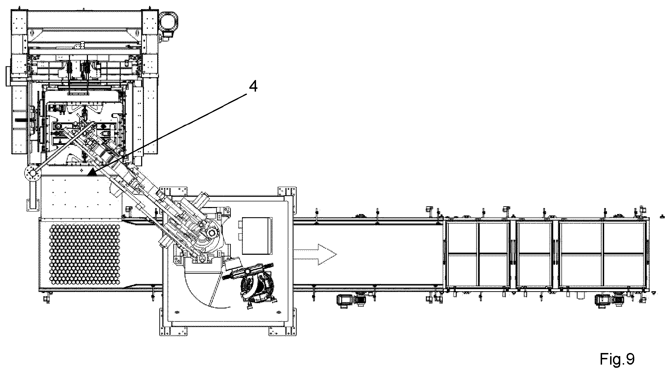

- Figures 2, 6, 9 show in plan a succession of operating configurations;

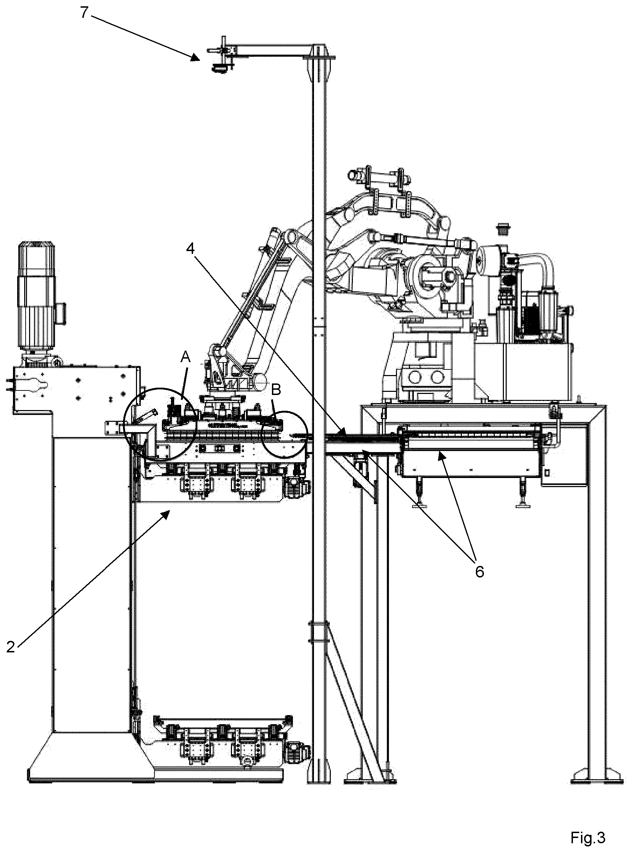

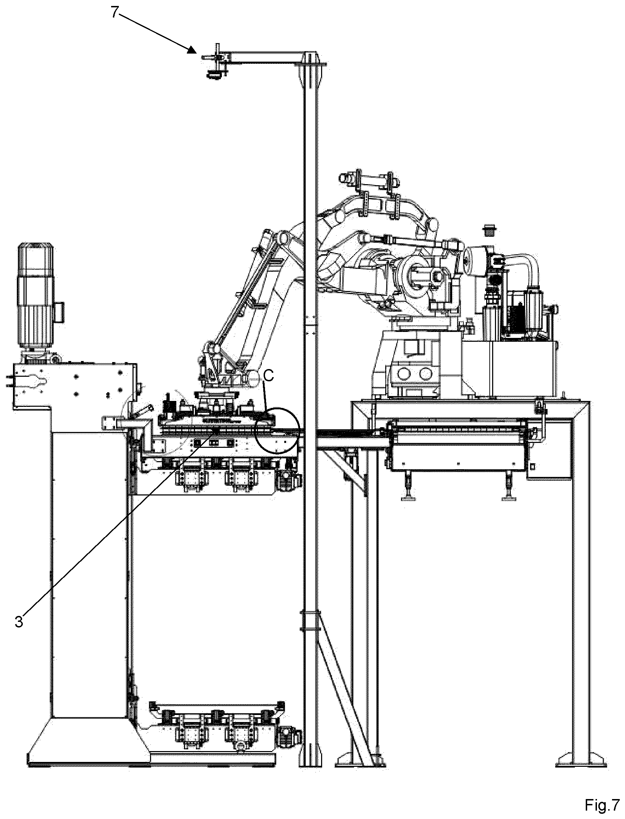

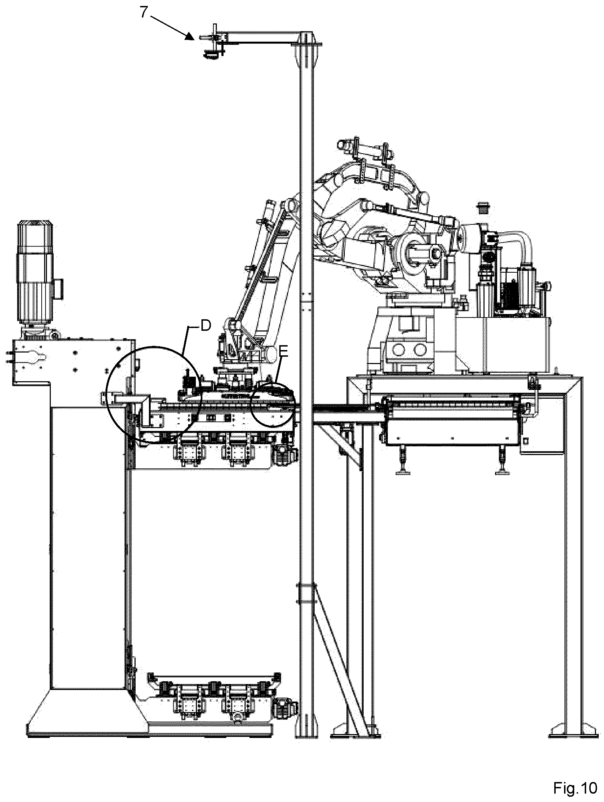

- Figures 3, 7, 10 show views in elevation, corresponding respectively with the configurations of Figures 2, 6, 9;

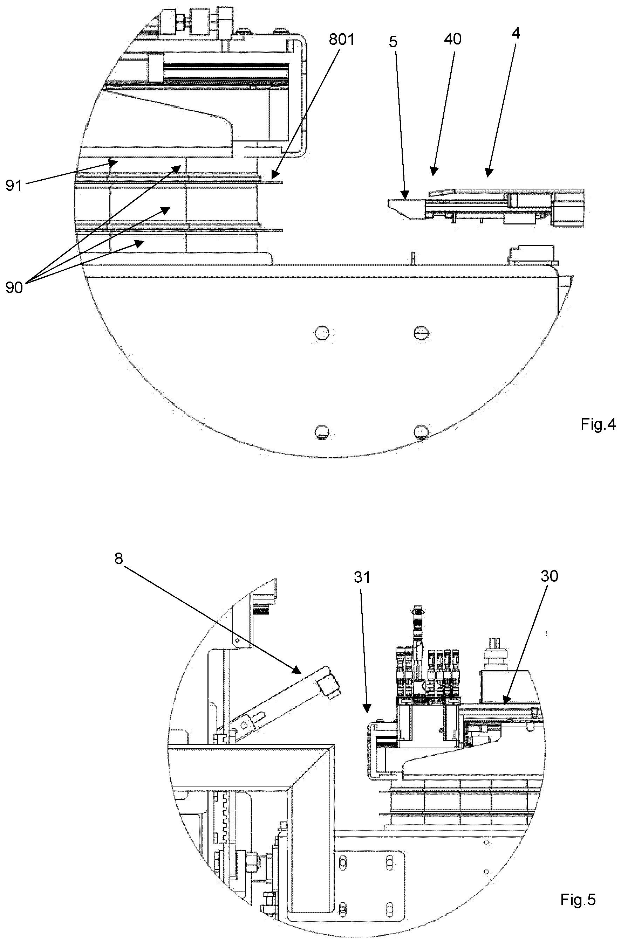

- Figures 4 and 5 show respectively the details B and A of Figure 3;
- Figure 8 shows the detail C of Figure 7;

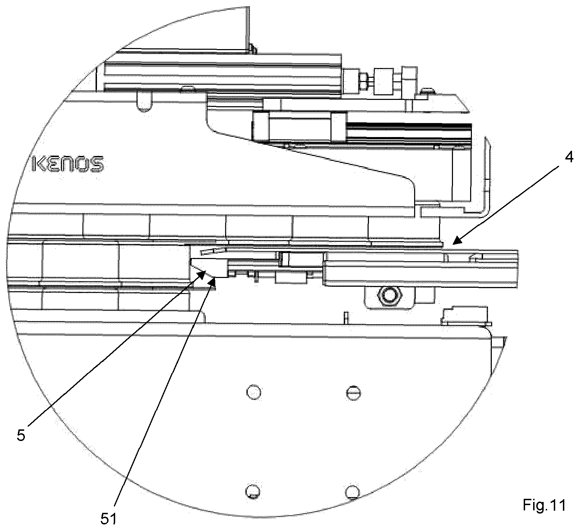

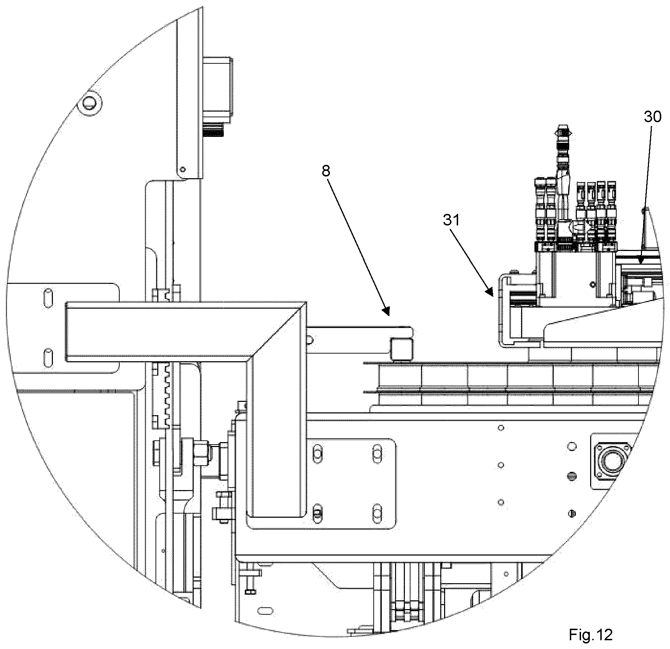

- Figures 11 and 12 show respectively the details E and D of Figure 10;

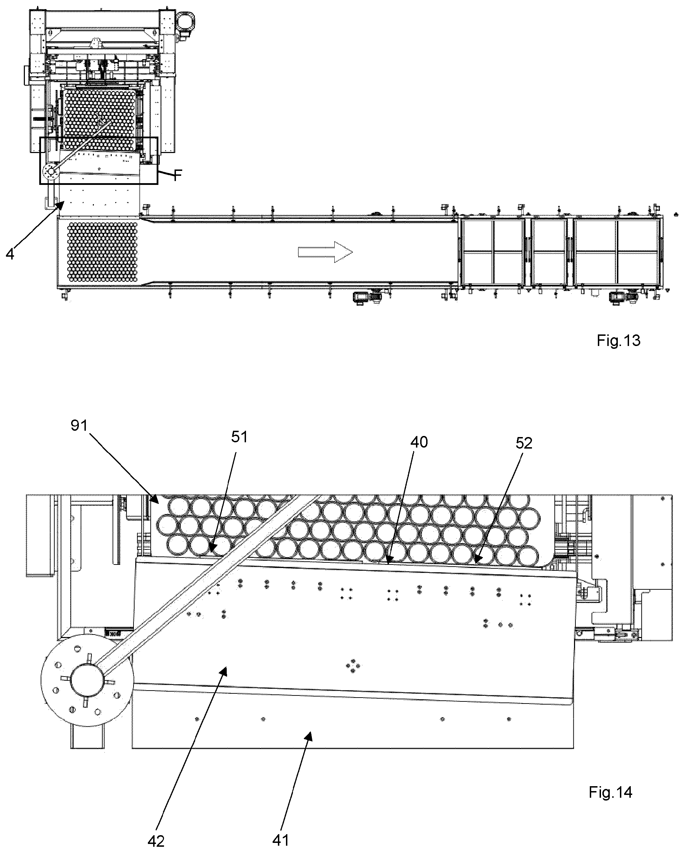

- Figure 13 shows a configuration of adaptation of the system to an incorrect orientation of the layer to be removed;
- Figure 14 shows the detail F of Figure 13.

In the appended drawings, reference number 1 denotes a depalletising system. In particular, the purpose of said depalletising system 1 is to remove layers of loose containers stacked on top of each other (the containers of one layer are not constrained to one another by means of wrapping tape or packaging that makes them solidly constrained to one another). The containers are typically cans or packets; typically for food products (corn, pulses, beverages, etc.) or other. The containers are therefore distributed on the layer according to a predefined pattern; typically, the containers are in contact in this pattern. The system 1 comprises a positioning zone 2 for positioning a stack of layers of containers. The containers, in particular the containers of one layer, are loose. The containers of one layer lie on the same horizontal plane. Typically, they are arranged according to a polygonal arrangement, in particular quadrilateral, typically rectangular or square. Opportunely, the system 1 comprises lifting means for lifting the stack, positioned at the positioning zone 2. The lifting means allows the stack to be lifted after the upper layer has been depalletised. This allows depalletising of the subsequent layer.

The system 1 also comprises a removal head 3 for removing an upper layer of said layers of the stack. The removal head 3 is suitable for moving the upper layer by sliding (preferably by suction and sliding). The removal head 3 advantageously, but not necessarily, can comprise suction means 30. They perform a suction action on the layer of containers. This causes a stiffening of the layer of containers, which are constrained to the head 3 by suction. As a consequence, there could be a minimal lifting or a reduction of the thrust caused by gravity on the layer underneath. Opportunely, the removal head 3 comprises a suction hood. The hood is turned downwards. Opportunely, the hood is substantially horizontal during use. It can comprise a plurality of holes and corresponding suction cups or, in any case, a plurality of holes and a spongy fabric that allows the passage of air to allow the suction action. Opportunely, the holes are distributed uniformly and regularly on the hood. Furthermore, the removal head 3 comprises at least one sidewall 31 for pushing the upper layer. Opportunely, the sidewall 31 extends transversely to the hood. In particular, it extends vertically. The sidewall 31 extends transversely (or rather orthogonally) to a direction of movement of the upper layer of containers during unloading from the stack. Advantageously, the removal head 3 comprises several sides; in particular, in addition to the sidewall 31 for pushing, it comprises two sidewalls for containment; these extend mutually opposite and allow side containment of the layer during movement. Typically, they extend parallel to the direction of movement. Advantageously, there are four sidewalls, two by two opposite each other. The sides delimit the containment space intended to house the layer of containers. Opportunely, the sidewalls are movable in order to narrow or enlarge the containment space intended to house the layer of containers.

The system 1 opportunely comprises a robot that moves the head 3. The robot could be a multi-axis robot, for example with at least six axes. Or it could be a Cartesian system.

The system 1 also comprises an unloading support 4 that can be moved closer to the upper layer of said layers. In this manner, it can support from underneath the upper layer moved by the removal head 3. Said unloading support 4 defines, in fact, an unloading path for the upper layer of the stack. The pushing sidewall 31 allows the upper layer of containers to be pushed from the stack towards the support 4.

The system 1 comprises sensor means 5 that allow said support 4 to be positioned and oriented with respect to the upper layer into the desired position. Opportunely, the upper layer is intended to be moved onto the unloading support 4 moved by the head 3 and remaining substantially in contact or, in any case, near to the support 4.

The sensor means 5 comprises a first and a second sensor 51, 52 (for example, a first and a second probe 51, 52), which are positioned on one side 40 of the support 4 intended to face the stack. The first and the second probe 51, 52 are on the same side of the support 4. They are projecting from the support 4. Opportunely, the first and second probe 51, 52 have an elongated shape. They are mutually aligned along a preponderant direction identified by the elongated shape. The first and the second probe 51, 52 are opportunely distanced from one another. When the first and the second probe 51, 52 detect the contact with an outside body (typically the stack), the system 1 understands that the desired position has been reached. In that position, the support 4 is therefore alongside, adjacent to and near the stack (in particular, the upper layer thereof or the layer immediately underneath).

In an alternative solution, the sensor means 5 might not be probes, but more generically a system that detects the distance from a body (for example, infra-red sensors, laser sensors or ultrasound sensors or viewing systems or other). What is described above for the first and the second probe 51, 52 can be intended more generically as referring to a first and a second sensor 51, 52.

The system 1 comprises means 6 for advancing and distancing said support 4 with respect to the layers of containers. The moving means 6 could comprise an electric motor or a pneumatic/hydraulic drive system. An approaching stroke of the support 4 induced by the means 6 ends due to reaching of the desired position detected by the sensor means 5. The sensor means 5 therefore provides an input capable of arresting advancement of the means 6 towards the stack.

The support 4 comprises a first portion 41. Opportunely, the first portion 41 is constrained to the advancing and distancing means 6. The first portion 41 translates along a pre-set direction under the action of the advancing means 6. The advancing means 6 typically allow a rectilinear displacement forwards and backwards. Typically, the advancing and distancing means 6 comprise an actuator and guide means for the support 4 along one direction.

The support 4 comprises a second portion 42. The second portion 42 is constrained to the first portion 41 and tilting (or rather rotating) with respect to the first portion 41 to approach an edge of the upper layer or, in any case, the stack. The second portion 42 is therefore not rigidly constrained with respect to the first portion 41. In this manner, it can compensate for any deviations with respect to the theoretical positioning of the upper layer. Opportunely, the second portion 42 is tilting (preferably rotating) remaining parallel to an imaginary horizontal plane. In particular, the second portion 42 is hinged to the first portion 41. Advantageously, the hinge is rotatable around a substantially vertical axis. The second portion 42 can be idly rotatable around the first portion 41. Opportunely, a pin and a bearing are present that mutually constrain the first and the second portion 41, 42. The second portion 42 is closer to the stack than the first portion 41. The first and the second portion 41, 42 define resting zones of the upper layer of the stack and are located close to one another. They can therefore move one with respect to the other, but define a resting surface on which the upper layer (just removed from the stack) can move. The first and the second portion 41, 42 may be partially overlapping and consecutive to each other. Although there is discontinuity between the first and the second portion 41, 42, a gap that significantly distances the first and the second portion 41, 42 is not present. This facilitates sliding of the layer of containers. Opportunely, the second portion 42 comprises a lead-in to facilitate displacement of the second portion 42 towards the stack (for example, avoiding jamming of the layer). This lead-in is an initial ascent; this, for example, avoids the second portion 42 being blocked by a sheet immediately below the upper layer, preventing advancement of the second portion 42.

The system 1 comprises viewing means 7 that allow positioning and centring of the removal head 3 vertically above the upper layer of the stack. For example, the viewing means 7 comprises a camera capable of acquiring one or more images of the upper layer of the stack. The viewing means 7 is advantageously located in a top zone of the positioning zone 2. Advantageously, advancement of the support 4 (in particular, the orientation of the second portion 42) is not controlled by the viewing means 7, but by the sensor means 5. Similarly, the advancement/distancing means 6.

The viewing means 7 can possibly comprise a plurality of viewing points. The depalletising system 1 opportunely comprises a control unit that activates the support 4 and the head 3 in a synchronised manner. Advantageously, said control unit receives inputs from the viewing means 7. The viewing means 7 is distinct and separate from the sensor means 5.

The viewing means 7 might also not be present. In that case, the head 3 is advantageously oversized with respect to the layer of containers to be moved. In particular, the hood in which the suction means 30 is located and/or the space identifiable by the sidewalls are oversized (however, the sidewalls are advantageously adjustable to approach the perimeter of the layer of containers). In that case, the more approximate positioning is compensated by the larger dimension of the head 3.

Opportunely, sidewalls for containment of the layers of stacked containers are absent in the positioning zone 2. In particular, four containment sidewalls are absent. In fact, the support 4 can be oriented/adjusted and therefore it is no longer strictly necessary to maintain a precise positioning of the layers of containers in the zone 2. This does not mean that, even in the absence of containment sidewalls, support uprights of the upper parts of the system 1 cannot be present. Opportunely, the system 1 comprises gripping means 8 for gripping a sheet of the stack interposed between the layers of stacked containers. Said sheet can be made, for example, from plastic material. The gripping means 8 is opportunely of the mechanical type. Opportunely, it comprises a calliper for retention of the sheet or a suction cup. This prevents the sheet underneath the upper layer of the stack from being removed by the head 3 (or, in any case, from impeding the movement of the upper layer). The gripping means 8 is advantageously located in an upper part of the positioning zone 2.

Opportunely, the positioning zone 2 is at least partly interposed between the gripping means 8 and the support 4. In plan, the gripping means 8 and the support 4 are located in opposite zones of the positioning zone 2.

Opportunely, the gripping means 8 is movable at least between a disengagement position and an operating position in which they can perform their action.

An object of the present invention is a depalletising method for depalletising layers of containers from a stack of said layers.

Opportunely, this method can be implemented by a depalletising system having one or more of the features of the depalletising system 1 described previously.

This method comprises the step of positioning stacked layers 90 of containers (preferably loose) in a positioning zone 2. This positioning zone 2 extends mainly vertically (in order to house the stack). Opportunely, in plan it has overall dimensions slightly larger than the one of the layer of containers.

The method comprises the step of moving an unloading support 4 with respect to the upper layer 91 of the layers 90 of containers. This allows the support 4 to be oriented into a desired position detectable by the sensor means 5. Orienting the support 4 into a desired position therefore allows a compensation of any misalignments between the upper layer of the stack and the support 4 to be obtained. These misalignments could mean that the upper layer encounters significant gaps (even with an uneven width). These gaps form between the upper layer 91 and the support 4 and impede the movement (which occurs by suction, but also by sliding; it is therefore important for the layer to have a lower support 4 during movement).

The method comprises the step of removing an upper layer 91 of the layers 90 of stacked containers. This step occurs by means of a removal head 3. The removal head 3 moves, at least by means of one pushing sidewall 31, the upper layer 91, in order to move it from the stacked layers 90 at least as far as the support 4. The movement takes place by sliding. Preferably, the movement occurs by suction and sliding. Opportunely, the removal head sucks the upper layer of containers 91 above and moves it by sliding. The upper layer 91 of containers is not lifted with respect to a lower resting surface (other than accidentally, for a minimum height lower than 5 millimetres, for example, in certain sections of the stroke).

Opportunely, the method comprises the step of identifying the position of the upper layer 91 of the stack by means of viewing means 7, for example image acquisition means. The inputs of the viewing means 7 are used for centring the removal head 3 on the upper layer 91 to be removed. Advantageously, they do not, on the other hand, guide movement of the support 4.

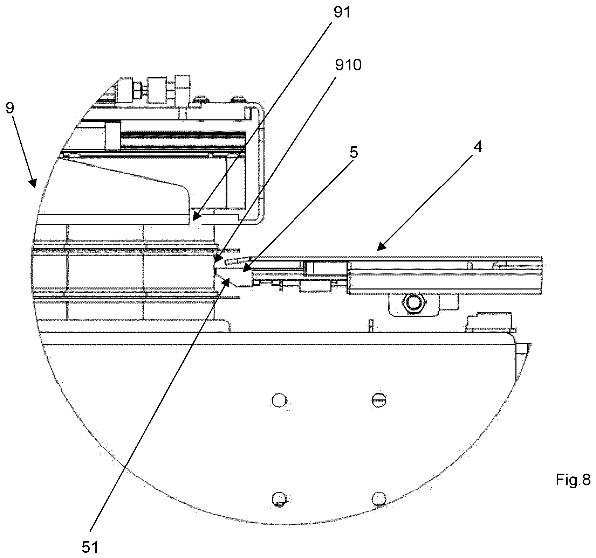

The step of moving the unloading support 4 with respect to the upper layer 91 causes a change in orientation of at least one part of the support 4 to bring an edge 40 of the support 4 closer to the stack 9 (in particular, to an edge 910 of the first layer of containers under the upper layer 91 - see Figure 8 - or to an edge of the upper layer 91) and to reach said desired position. In particular, in the desired position, the edge 40 and the edge 910 are parallel.

Reaching of said desired position is signalled by sensor means 5, in particular by contact with the stack 9 of a first and a second probe 51, 52 arranged on a side of the support 4. As already indicated above, what is indicated for the first and the second probe 51, 52 can be repeated more generically for a first and a second sensor 51, 52.

Opportunely, the step of removing an upper layer 91 provides for:
- moving the upper layer 91 with the head 3 for a first section towards the support 4;
- after a pause, moving the upper layer 91 (with the head 3) for a second section, de-stacking it entirely.

Opportunely, the method comprises the step of gripping a sheet 801 of the stack 9 interposed between the upper layer 91 of the stack 9 and the one underneath.

Opportunely, the step of retaining (for example, gripping) the sheet 801 by means of gripping means occurs during the pause between the steps of moving the upper layer 91 for a first section and for a second section. This can occur, for example, by means of the gripping means 8.

After removal of the upper layer 91, the method comprises the step of lifting the stack 9 in order to bring a new layer of containers to the height of the support 4. After removal of the upper layer 91, but before lifting of the stack 9, the method provides for temporarily moving the support 4 away. In this manner, it is not an impediment to lifting and can re-approach the stack 9 to compensate once again for any variations in the subsequent layer.

The upper layer 91 removed from the stack 9 and placed on the support 4 is then moved away, for example by means of conveying means 80, such as a conveyor belt for example.

The present invention achieves important advantages.

In the first place, it allows movement of the containers to be optimised, allowing depalletising of the upper layer using a support 4 below that is able to ensure a support for the containers without major discontinuities. It can, in fact, adapt its own orientation and thus compensate for any lack of uniformity in the orientations of the layer of supports.

The invention thus conceived is susceptible of numerous modifications and variants, all falling within the scope of the inventive concept that characterises it. Moreover, all the details may be replaced by other technically equivalent elements. All the materials used, as well the dimensions, may in practice be any whatsoever according to needs.

## Claims

1. A depalletising system, comprising:
- a zone (2) for positioning a stack of layers of loose containers;
- a head (3) for removing an upper layer of said layers of the stack; said removal head (3) being suitable for moving said upper layer by sliding; said removal head (3) comprising at least one sidewall (31) for pushing the upper layer;
- an unloading support (4) movable with respect to the stack and that allows the upper layer moved by the removal head (3) to be supported;
- sensor means (5) that allow the reaching of a desired position of the support (4) with respect to the upper layer to be detected.

2. The system according to claim 1, **characterised in that** said removal head (3) is suitable for moving said upper layer by suction and sliding and comprising suction means (30).

3. The system according to claim 1 or 2, **characterised in that** the sensors means (5) comprise a first and a second sensor (51, 52) which are placed on one side (40) of the support (4) intended to face said stack.

4. The system according to claim 3, **characterised in that** the contact of the first and of the second sensor (51, 52) with said stack signals reaching of the desired position.

5. The system according to any one of the preceding claims, **characterised in that** it comprises means (6) for advancing and distancing said support (4) with respect to the layers of containers;
said support (4) comprising:
- a first portion (41) constrained to the advancing and distancing means (6);
- a second portion (42) constrained to the first portion (41) and tilting with respect to the first portion (41) to approach an edge of the upper layer.

6. The system according to any one of the preceding claims, **characterised in that** it comprises viewing means (7) that allow positioning and centring of the removal head (3) vertically above the upper layer of the stack.

7. The system according to any one of the preceding claims, **characterised in that** in said positioning zone (2) side walls of containment of the layers of stacked containers are absent.

8. The system according to any one of the preceding claims, **characterised in that** it comprises means (8) for gripping a sheet of the stack interposed between the layers of stacked containers.

9. A method for depalletising a stack of layers of containers, comprising the steps of:
- positioning the layers (90) of stacked containers in a positioning zone (2);
- moving an unloading support (4) with respect to an upper layer (91) of the stack (9) to orient the support (4) according to a desired position, the reaching of which is detectable by means of sensor means (5);
- removing the upper layer (91) of the stack (9) by means of a removal head (3); said removal head (3) moving by means of a sidewall (31) for pushing the upper layer (91) to displace it from the stack (9) at least as far as the support (4).

10. The method according to claim 9, **characterised in that** the removal head (3) sucks the upper layer (91) from above to move it with the sidewall (31) from the stack (9) at least as far as the support (4).

11. The method according to claim 9 or 10, **characterised in that** the step of moving the unloading support (4) with respect to the upper layer (91) causes an approach to the layer (91) and a change in orientation of at least a part of the support (4) to bring an edge (40) of the support (4) closer to an edge of the stack (9) and to reach said desired position.

12. The method according to claim 9 or 10 or 11, **characterised in that** the reaching of said desired position is signalled by contact with the stack (9) of a first and of a second sensor (51, 52) arranged on a side of the support (4).
